# EUROPEAN PATENT SPECIFICATION

(11) **EP 3 137 663 B1**
(45) Date of publication and mention of the grant of the patent: **19.04.2023**
(21) Application number: 15722395.9
(22) Date of filing: 01.05.2015
(51) Int. Cl.: B32B 1/08, B32B 5/02, B32B 15/14, B60R 16/02, B32B 5/24, B32B 5/28, B32B 38/04, D03D 1/00, D03D 3/02, D03D 15/00, D03D 15/567

(54) **MICRO-PERFORATED REFLECTIVE TEXTILE SLEEVE AND METHOD OF CONSTRUCTION THEREOF**
MIKROPERFORIERTE RÜCKSTRAHLENDE TEXTILHÜLLE UND KONSTRUKTIONSVERFAHREN DAFÜR
MANCHON TEXTILE RÉFLÉCHISSANT MICRO-PERFORÉ, ET SON PROCÉDÉ DE CONSTRUCTION

(30) Priority: 01.05.2014 US 201461987299 P
(43) Date of publication of application: 08.03.2017
(73) Proprietor: Federal-Mogul Powertrain LLC, Southfield, MI 48034 (US)
(72) Inventor: CHEN, Ming-ming, West Chester, PA 19382 (US); HO, Wai, Kit, Cypress, TX 77429 (US)
(74) Representative: Novagraaf Group
(86) International application number: PCT/US2015/028768
(87) International publication number: WO 2015/168535

(56) References cited:
- EP-A1- 0 025 691
- EP-B1- 1 687 561
- WO-A1-2010/030298
- GB-A- 2 249 753
- US-A1- 2011 275 268

## Description

### CROSS-REFERENCE TO RELATED APPLICATION

This patent claims the benefit of U.S. Provisional Application Serial No. 61/987,299, filed May 1, 2014, and U.S. Utility Application Serial No. 14/701,875, filed May 1, 2015.

### BACKGROUND OF THE INVENTION

### 1. Technical Field

This invention relates generally to textile sleeves for protecting elongate members, and more particularly to textile sleeves having a reflective outer surface.

### 2. Related Art

Tubular textile sleeves are known for use to provide protection to internally contained elongate members, such as a wire harness, cable, or hoses, for example. It is further known to apply various types of coatings, such as sprayed, plated or dipped, on textile sleeves to form a heat reflective surface on the sleeves. It is also known to apply a layer of imperforate foil on an outer surface of a sleeve, wherein the outer layer of foil provides a reflective barrier to radiant heat, thereby offering protection against the transfer of heat to the underlying sleeve material and to the elongate members contained within the sleeve. Although imperforate foil layers can be generally effective to shield the material of the sleeve and the contents therein from exposure to heat, it limits the degree to which the sleeve can be flexed without cracking and tearing.

Document GB2249753A describes a method of making a flexible sheet material suitable for use as a barrier for resisting heat transfer from a source of radiant heat. The method comprises forming a layer of a silicone elastomer and bonding a metallic foil less than one micron in thickness to one surface of the layer by transferring the metallic foil to the elastomer layer from a supporting substrate. The elastomer layer may be formed on a knitted, braided or woven fabric support.

### SUMMARY OF THE INVENTION

According to the invention, a tubular sleeve for providing protection to elongate members contained within the sleeve against external radiant heat is provided as defined in appended claim 1. The sleeve includes an inner tubular textile wall forming a cavity sized for receipt of the elongate members and an outer foil layer bonded to an outer surface of the textile wall. The outer foil layer is micro-perforated, wherein the micro-perforated holes enhance the ability of the sleeve to be flexed and routed over meandering paths without causing the outer foil layer to tear or crack. Further, the micro-size of the perforated holes does not sacrifice or otherwise impact the ability of the micro-perforated outer foil layer to perform its intended function of reflecting external radiant heat, thereby providing the same or substantially the same thermal protection to the elongate members contained within the cavity of the sleeve as compared to an imperforate foil layer. Further, by minimizing the propensity of crack or tear formation, the micro-perforated outer foil layer provides the sleeve with enhanced durability and life expectancy relative to non-perforated foil layered sleeves.

In accordance with the invention, the micro-perforated holes have a diameter between about 50-300 µm and have a density between about 300-340 holes per square inch (46.5-52.7 holes per square cm).

In accordance with another aspect of the invention, the micro-perforated holes can have a generally uniform density over the substantial entirety of the foil layer.

In accordance with another aspect of the invention, the micro-perforated holes can range between about 50-100 µm in diameter.

In accordance with another aspect of the invention, the inner textile wall can be formed from interlaced yarn filaments.

In accordance with another aspect of the invention, the inner textile wall can be formed from a nonwoven material.

In accordance with another aspect of the invention, the micro-perforated outer foil layer can be spiral wrapped about the inner textile wall.

In accordance with another aspect of the invention, the micro-perforated outer foil layer can have opposite edges overlapped in bonded relation with one another.

In accordance with another aspect of the invention, the inner textile wall can be a closed, seamless circumferentially continuous wall.

In accordance with another aspect of the invention, the inner textile wall can be an open wall having lengthwise extending opposite edges biased into overlapping relation with one another.

In accordance with another aspect of the invention, a foil tape having micro-perforated holes can be applied over at least a portion of a seam formed between the overlapped edges.

According to the invention, a method of constructing a tubular sleeve for providing protection to elongate members contained within the sleeve against external radiant heat is provided as defined in appended claim 9. The method includes forming an inner textile wall of the sleeve having opposite inner and outer surfaces. The method further includes bonding an outer foil layer to the outer surface, with the inner surface remaining configured to bound a cavity sized for receipt of the elongate members therein. Further yet, the method includes providing the outer foil layer with micro-perforated holes, wherein the micro-perforated holes provide the sleeve with an ability to be flexed and routed over meandering paths without tearing or cracking the outer foil layer.

In accordance with the invention, the method includes forming said micro-perforated holes having a diameter between about 50-300 µm and perforating the micro-sized holes having a density between about 300-340 holes per square inch (46.5-52.7 holes per square cm).

In accordance with another aspect of the invention, the method can include forming the micro-perforated holes having a generally uniform density over the entirety of the outer foil layer.

In accordance with another aspect of the invention, the method includes forming the micro-perforated holes ranging between about 50-100 µm in diameter.

In accordance with another aspect of the invention, the method can include forming the inner textile wall from interlaced yarn filaments.

In accordance with another aspect of the invention, the method can include forming the inner textile wall from a nonwoven material.

In accordance with another aspect of the invention, the method can include spiral wrapping the outer foil layer about the inner textile wall.

In accordance with another aspect of the invention, the method can include forming the inner textile wall as a closed, seamless circumferentially continuous wall.

In accordance with another aspect of the invention, the method can include forming the inner textile wall as an open wall having opposite edges extending along a length of the sleeve, with the opposite edges being biased into overlapping relation with one another.

### BRIEF DESCRIPTION OF THE DRAWINGS

These and other aspects, features and advantages of the invention will become readily apparent to those skilled in the art in view of the following detailed description of the presently preferred embodiments and best mode, appended claims, and accompanying drawings, in which:
Figure 1 is a schematic perspective view of a protective textile sleeve constructed in accordance with one aspect of the invention shown disposed about an elongate member to be protected from external radiant heat;
Figure 1A is a partial schematic view of an inner wall constructed in accordance with one aspect of the invention of the sleeve of Figure 1;
Figure 1B is a partial schematic view of an inner wall constructed in accordance with one aspect of the invention of the sleeve of Figure 1;
Figure 2 is a cross-sectional view taken generally along the line 2-2 of Figure 1;
Figure 3 is a schematic perspective view of a protective textile sleeve constructed in accordance with another aspect of the invention shown disposed about an elongate member to be protected from external radiant heat;
Figure 4 is a schematic perspective view of a protective textile sleeve constructed in accordance with another aspect of the invention shown disposed about an elongate member to be protected from external radiant heat;
Figure 5 is a schematic perspective view of a protective textile sleeve constructed in accordance with another aspect of the invention shown disposed about an elongate member to be protected from external radiant heat; and
Figure 6 is a schematic perspective view of a protective textile sleeve constructed in accordance with another aspect of the invention shown disposed about an elongate member to be protected from external radiant heat.

### DETAILED DESCRIPTION OF PREFERRED EMBODIMENTS

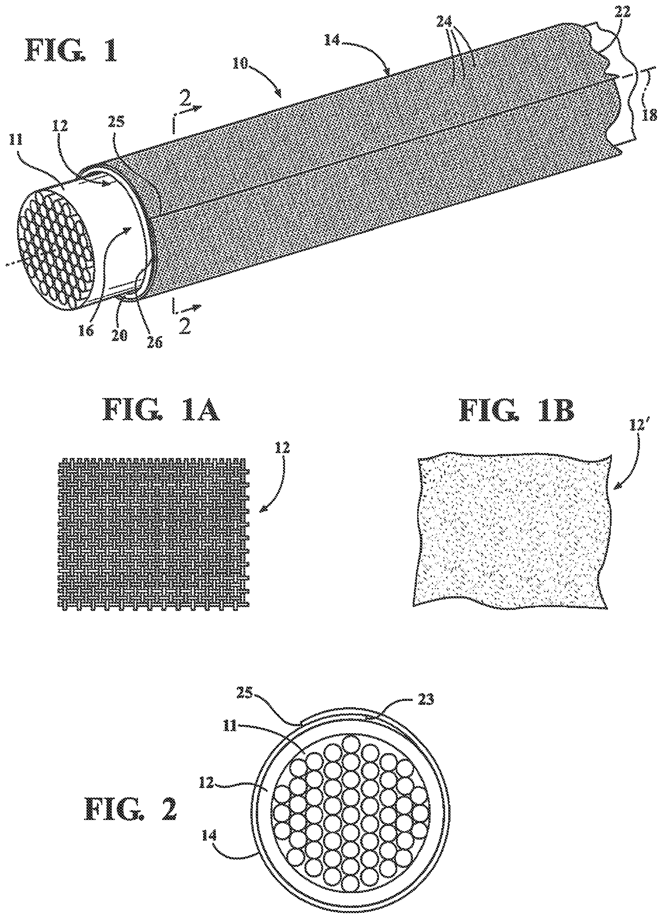

Referring in more detail to the drawings, Figure 1 shows a tubular textile sleeve, referred to hereafter as sleeve 10, constructed according to one embodiment of the invention for providing protection against external radiant heat to elongate members, such as a hose, wires, or a wire harness 11, by way of example and without limitation, contained within the sleeve 10. The sleeve 10 has an inner wall 12, illustrated in Figure 1 as a seamless and circumferential ly continuous wall, with a reflective outer layer 14 bonded to an outer surface of the inner wall 12. The inner wall 12 has an inner surface that defines a central cavity 16 sized for receipt of the elongate members 11 therein, wherein the cavity 16 extends axially along a central longitudinal axis 18 between opposite ends 20, 22 of the sleeve 10. The reflective outer layer 14 provides a thermal barrier to the inner wall 12 and the elongate members 11 against external radiant heat, thereby protecting the elongate members 11 against unwanted exposed to external radiant heat. The reflective outer layer 14 is provided as an outermost layer, preferably as a layer of foil, such as aluminum, by way of example and without limitation, having micro-perforated holes 24. The micro-perforated holes 24 enhance the ability of the sleeve 10 to be flexed and routed over meandering paths without tearing or cracking the foil outer layer 14. Further, with the micro-perforated holes 24 being micro-sized, it has been found via experimentation that the holes 24, as formed in accordance with the invention, do not sacrifice or otherwise lessen the ability of the outer foil layer 14 to perform its intended function of reflecting external radiant heat, thereby providing insulative protection to the elongate members 11 contained within the cavity 16 of the sleeve 10. Further, by minimizing the propensity of crack or tear formation in the thin foil outer layer 14, the foil outer layer 14 provides the sleeve 10 with enhanced durability and life expectancy relative to imperforate foil layered sleeves.

The inner wall 12 can be constructed having any suitable length and diameter, depending on the application and size of the elongate member 11 to be protected. The inner wall 12 can be constructed from any suitable interlaced yarn filaments (Figure 1A), including monofilaments and/or multifilaments, via weaving, knitting, braiding, having a desired interlace pattern for the intended application, or from a layer of nonwoven material 12' (Figure 1B). Accordingly, the inner wall 12 can be constructed having various structural properties and configurations.

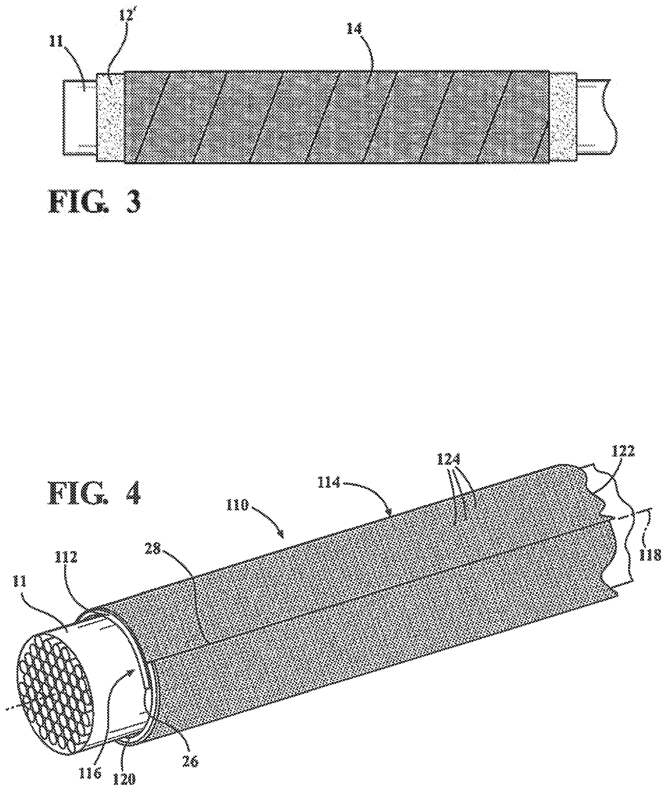

The foil outer layer 14 is provided as a standard thickness wrappable foil, and has micro-sized perforate holes 24 ranging between about 50-300 µm in diameter, and more preferably ranging between about 50-100 µm in diameter, and in one example, were formed being 50 µm in diameter. The holes 24 are formed over the entirety or substantial entirely of the foil outer layer 14 having a generally uniform density between about 300-340 holes per square inch (46.5-52.7 holes per square cm), and in one example, were formed having a generally uniform density of about 320 holes per square inch (49.6 holes per square cm). The size and density of the holes 24 have been found to provide the sleeve 10 with enhance flexibility without causing the foil outer layer 14 to tear or crack in use, such as while being bent or routed over meandering paths, while also retaining the emissivity of the foil outer layer 14 as compared to an imperforate sheet of the foil, thereby being fully functional to protect inner wall 12 and the elongate members 11 within the cavity 16 of the sleeve 10 from exposure to external radiant heat. The foil outer layer 14 can be provided in rectangular sheets sized to be "cigarette" wrapped about the inner wall 12 to bring opposite edges 23, 25 of the foil outer layer 14 into overlapping, bonded relation with one another, as best shown in Figure 2, or it can be provided in a suitable width elongate strip and then spiral wrapped about the wall 12, as desired (Figure 3). Any suitable adhesive can be used to facilitate bonding the foil outer layer 14 to an outer surface of the inner wall 12.

In Figure 4, a sleeve 110 constructed in accordance with another aspect of the invention is shown, wherein the same reference numerals, offset by a factor of 100, are used to identify like features.

The sleeve 110 has an inner wall 112 constructed as a wrappable wall, and can be formed as a self-wrapping, "cigarette" type wall, if desired. As such, the inner wall 112 has opposite edges 26, 28 extending generally parallel to a central longitudinal axis 118 between opposite ends 120, 122 of the sleeve 110, wherein the opposite edges 26, 28 are brought into overlapping relation with one another to circumferentially bound a central cavity 116. Upon forming the inner wall 112, such as from interlaced yarn filaments (Figure 1A) or a nonwoven material (Figure 1B), as discussed above, the wall 112 can be laminated with a foil outer layer 114, wherein the foil outer layer 114 is formed from the same metal foil materials and with the same size and density of micro-sized holes 124 as discussed above, preferably over the entirety of the foil outer layer 114. Upon laminating the foil outer layer 114 to an outer surface of the inner wall 112, the laminated wall can be wrapped into its tubular form to bring the opposite edges 26, 28 into overlapping relation with one another. If the inner wall 124 is formed at least in part from heat-settable material, whether from a nonwoven material or interlaced yarn filaments, the inner wall 112 can be heat-set to take on a self-wrapping configuration, such that the opposite edges 26, 28 are automatically biased into overlapping relation with one another in the absence of an externally applied force. If the inner wall 114 is formed from interlaced yarn, at least some of the circumferentially extending yarn filaments can be provided as heat-settable yarn filaments to facilitate heat-setting the inner wall 114 into a tubular configuration. With the foil outer layer 114 fully covering an outer surface of the inner wall 112, the entire circumference of the sleeve 110 is assured of being covered by the foil outer layer 114. This said, it is to be understood that the opposite edges 26, 28 can remain free to be biased by an externally applied force to open the sleeve 110 along its length to facilitate placing the sleeve about the elongate member 111 or to remove the sleeve 110 from the elongate member 111, such as during service.

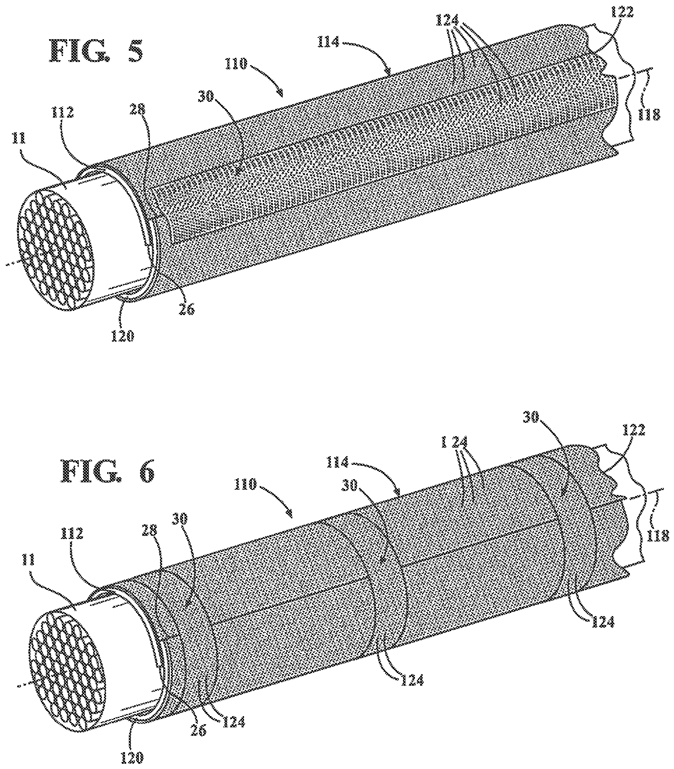

In accordance with another aspect of the invention, as shown in Figure 5, if desired, a perforated strip of foil tape 30, having the same size, pattern and density of holes 124, as discussed above, can be applied along at least a portion of, or along the entirety of the seam formed by the overlapping edges 26, 28 to completely seal the seam between the overlapping edges 26, 28. As such, the perforated foil tape 30 can be applied as a single strip over the entirety overlapping edges 26, 28 in generally parallel relation to the axis 118 to prevent the opposite edges 26, 28 from being inadvertently opened and to prevent the ingress of contamination. Otherwise, as shown in Figure 6, it should be recognized that individual strips of the perforated foil tape 30 could be wrapped circumferentially about the sleeve 110, if desired, thereby preventing the opposite edges 26, 28 from being inadvertently opened.

It should be recognized that sleeves 10, 110 constructed in accordance with the invention are suitable for use in a variety of applications, regardless of the sizes and lengths required. For example, they could be used in automotive, marine, industrial, aeronautical or aerospace applications, or any other application wherein protective sleeves are desired to protect nearby components against heat radiation.

It is to be understood that the above detailed description is with regard to some presently preferred embodiments, and that other embodiments readily discernible from the disclosure herein by those having ordinary skill in the art are incorporated herein and considered to be within the scope of the appended claims.

## Claims

1. A protective sleeve (10; 110) for providing protection to elongate members (11) contained within the sleeve against external radiant heat, comprising:
an inner textile wall (12; 12'; 112) having an outer surface and an inner surface, said inner surface being configured to bound a cavity (16; 116) for receipt of the elongate members; and
an outer foil layer (14; 114) bonded to said outer surface of said inner textile wall (12; 12'; 112),
**characterised in that** said outer foil layer has micro-perforated holes (24; 124),
wherein said micro-perforated holes (24; 124) have a diameter between about 50-300 µm and have a density between about 300-340 holes per square inch (46.5-52.7 holes per square cm).

2. The protective sleeve (10; 110) of claim 1, wherein said micro-perforated holes (24; 124) have a generally uniform density over the substantial entirety of said foil layer (14; 114).

3. The protective sleeve (10; 110) of claim 2, wherein said micro-perforated holes (24; 124) have a diameter between about 50-100 µm.

4. The protective sleeve (10; 110) of claim 1 wherein said micro-perforated holes (24; 124) have a diameter between about 50-100 µm.

5. The protective sleeve (110) of claim 1 wherein said inner textile wall (112) has opposite edges (26, 28) extending along a longitudinal axis (118) of said sleeve between opposite ends (120, 122), said opposite edges be wrapped about said longitudinal axis in overlapping relation with one another.

6. The protective sleeve (110) of claim 5 wherein said inner textile wall (112) is heat-set to bias said opposite edges (26, 28) in overlapping relation with one another, or
wherein said inner textile wall is formed of interlaced yarn filaments, or
wherein said inner textile wall is formed of a nonwoven material, or
wherein said overlapped opposite edges form a seam along the length of said inner textile wall, and further including a foil tape (30) bonded over at least a portion of said seam, said foil tape having micro-perforated holes (124), wherein optionally said foil tape extends over the substantial entirety of said seam.

7. The protective sleeve (10) of claim 1 wherein said inner textile wall (12; 12') is circumferentially continuous.

8. The protective sleeve (10) of claim 7 wherein said outer foil layer (14) has opposite edges (23, 25) overlapping one another, or
wherein said outer foil layer is spiral wrapped about said inner textile wall (12).

9. A method of constructing a tubular sleeve (10; 110) for providing protection to elongate members (11) contained within the sleeve against external radiant heat, comprising:
forming an inner textile wall (12; 12'; 112) having an outer surface and an inner surface configured to bound a cavity (16; 116) for receipt of the elongate members; and
bonding an outer foil layer (14; 114) to said outer surface of said inner textile wall (12; 12'; 112),
**characterised in that** said outer foil layer has micro-perforated holes (24; 124),
and further **characterised by** forming said micro-perforated holes (24; 124) having a diameter between about 50-300 µm; and by perforating the micro-sized holes having a density between about 300-340 holes per square inch (46.5-52.7 holes per square cm).

10. The method of claim 9 further including forming said micro-perforated holes (24; 124) having a generally uniform density over the substantial entirety of said foil layer.

11. The method of claim 10 further including forming said micro-perforated holes (24; 124) having a diameter between about 50-100 µm.

12. The method of claim 9 further including forming said micro-perforated holes (24; 124) having a diameter between about 50-100 µm.

13. The method of claim 9 further including forming said inner textile wall (112) having opposite edges (26, 28) extending along a longitudinal axis (118) of said sleeve (110) between opposite ends (120, 122) and wrapping said opposite edges about said longitudinal axis in overlapping relation with one another.

14. The method of claim 13 further including heat-setting said inner textile wall (112) to bias said opposite edges (26, 28) in overlapping relation with one another, or
further including forming said inner textile with interlaced yarn filaments, or
further including forming said inner textile wall with nonwoven material, or
further including bonding a foil tape (30) having micro-perforated holes (124) over at least a portion of a seam formed between said opposite edges, wherein optionally further including bonding said foil tape over the substantial entirety of said seam.

15. The method of claim 9 further including forming said inner textile wall (12; 12') being circumferentially continuous, wherein optionally.
further including bonding opposite edges (23, 25) of said outer foil layer (14) in overlapping relation one another, or
further including spiral wrapping said outer foil layer about said inner textile wall.

## Patentansprüche

1. Schutzhülse (10; 110) zum Bereitstellen eines Schutzes für längliche Elemente (11), die innerhalb der Hülse enthalten sind, gegen äußere Strahlungswärme, umfassend:
eine innere Textilwand (12; 12'; 112), die eine äußere Oberfläche und eine innere Oberfläche aufweist, wobei die innere Oberfläche konfiguriert ist, um einen Hohlraum (16; 116) für einen Empfang der länglichen Elemente abzugrenzen; und
eine äußere Folienschicht (14; 114), die an die äußere Oberfläche der inneren Textilwand (12; 12'; 112) geklebt ist,
**dadurch gekennzeichnet, dass** die äußere Folienschicht mikroperforierte Löcher (24; 124) aufweist,
wobei die mikroperforierten Löcher (24; 124) einen Durchmesser zwischen etwa 50-300 µm aufweisen und eine Dichte zwischen etwa 300-340 Löcher pro Quadratzoll (46,5-52,7 Löcher pro Quadratzentimeter) aufweisen.

2. Schutzhülse (10; 110) nach Anspruch 1, wobei die mikroperforierten Löcher (24; 124) eine im Allgemeinen gleichmäßige Dichte über die wesentliche Gesamtheit der Folienschicht (14; 114) aufweisen.

3. Schutzhülse (10; 110) nach Anspruch 2, wobei die mikroperforierten Löcher (24; 124) einen Durchmesser zwischen etwa 50-100 µm aufweisen.

4. Schutzhülse (10; 110) nach Anspruch 1, wobei die mikroperforierten Löcher (24; 124) einen Durchmesser zwischen etwa 50-100 µm aufweisen.

5. Schutzhülse (110) nach Anspruch 1, wobei die innere Textilwand (112) gegenüberliegende Kanten (26, 28), die sich entlang einer Längsachse (118) der Hülse zwischen gegenüberliegende Enden (120, 122) erstrecken, aufweist, wobei die gegenüberliegenden Kanten in überlappender Beziehung miteinander um die Längsachse herum gewickelt werden.

6. Schutzhülse (110) nach Anspruch 5, wobei die innere Textilwand (112) wärmefixiert ist, um die gegenüberliegenden Kanten (26, 28) in überlappender Beziehung miteinander vorzuspannen oder
wobei die innere Textilwand aus verflochtenen Fadenfilamenten ausgebildet ist oder
wobei die innere Textilwand aus einem Vliesmaterial ausgebildet ist oder
wobei die überlappenden gegenüberliegenden Kanten eine Naht entlang der Länge der inneren Textilwand ausbilden und ferner einschließend ein Folienband (30), das über zumindest einen Abschnitt der Naht geklebt ist, wobei das Folienband mikroperforierte Löcher (124) aufweist, wobei sich optional das Folienband über die wesentliche Gesamtheit der Naht erstreckt.

7. Schutzhülse (10) nach Anspruch 1, wobei die innere Textilwand (12; 12') in Umfangsrichtung fortlaufend ist.

8. Schutzhülse (10) nach Anspruch 7, wobei die äußere Folienschicht (14) gegenüberliegende Kanten (23, 25), die einander überlappen, aufweist oder
wobei die äußere Folienschicht um die innere Textilwand (12) herum spiralförmig gewickelt ist.

9. Verfahren zum Konstruieren einer rohrförmigen Hülse (10; 110) zum Bereitstellen des Schutzes für längliche Elemente (11), die innerhalb der Hülse enthalten sind, gegen äußere Strahlungswärme, umfassend:
Ausbilden einer inneren Textilwand (12; 12'; 112), die eine äußere Oberfläche und eine innere Oberfläche, die konfiguriert sind, um einen Hohlraum (16; 116) für den Empfang der länglichen Elemente abzugrenzen, aufweist; und
Kleben einer äußeren Folienschicht (14; 114) an die äußere Oberfläche der inneren Textilwand (12; 12'; 112),
**dadurch gekennzeichnet, dass** die äußere Folienschicht mikroperforierte Löcher (24; 124) aufweist,
und ferner **gekennzeichnet durch** Ausbilden der mikroperforierten Löcher (24; 124), die einen Durchmesser zwischen etwa 50-300 µm aufweisen; und **durch** Perforieren der mikrogroßen Löcher, die eine Dichte zwischen etwa 300-340 Löcher pro Quadratzoll (46,5-52,7 Löcher pro Quadratzentimeter) aufweisen.

10. Verfahren nach Anspruch 9, ferner einschließend das Ausbilden der mikroperforierten Löcher (24; 124), die eine im Allgemeinen gleichmäßige Dichte über die wesentliche Gesamtheit der Folienschicht aufweisen.

11. Verfahren nach Anspruch 10, ferner einschließend das Ausbilden der mikroperforierten Löcher (24; 124), die einen Durchmesser zwischen etwa 50-100 µm aufweisen.

12. Verfahren nach Anspruch 9, ferner einschließend das Ausbilden der mikroperforierten Löcher (24; 124), die einen Durchmesser zwischen etwa 50-100 µm aufweisen.

13. Verfahren nach Anspruch 9, ferner einschließend das Ausbilden der inneren Textilwand (112), die gegenüberliegende Kanten (26, 28), die sich entlang einer Längsachse (118) der Hülse (110) zwischen gegenüberliegenden Enden (120, 122) erstrecken, aufweist und Wickeln der gegenüberliegenden Kanten um die Längsachse herum in überlappender Beziehung miteinander.

14. Verfahren nach Anspruch 13, ferner einschließend ein Wärmefixieren der inneren Textilwand (112), um die gegenüberliegenden Kanten (26, 28) in überlappender Beziehung miteinander vorzuspannen oder
ferner einschließend das Ausbilden des inneren Textils mit verflochtenen Fadenfilamenten oder
ferner einschließend das Ausbilden der inneren Textilwand mit Vliesmaterial oder
ferner einschließend das Kleben eines Folienbands (30) mit mikroperforierten Löchern (124) über zumindest einen Abschnitt einer Naht, die zwischen den gegenüberliegenden Kanten ausgebildet ist, wobei optional ferner einschließend das Kleben des Folienbands über die wesentliche Gesamtheit der Naht.

15. Verfahren nach Anspruch 9, ferner einschließend das Ausbilden der inneren Textilwand (12; 12'), die in Umfangsrichtung fortlaufend ist, wobei optional.
ferner einschließend das Kleben gegenüberliegender Kanten (23, 25) der äußeren Folienschicht (14) in überlappender Beziehung miteinander oder
ferner einschließend das spiralförmige Wickeln der äußeren Folienschicht um die innere Textilwand herum.

## Revendications

1. Manchon de protection (10 ; 110) destiné à fournir une protection aux éléments allongés (11) contenus dans le manchon contre la chaleur rayonnante externe, comprenant :
une paroi textile interne (12 ; 12' ; 112) ayant une surface externe et une surface interne, ladite surface interne étant conçue pour délimiter une cavité (16 ; 116) pour la réception des éléments allongés ; et
une couche de feuille externe (14 ; 114) liée à ladite surface externe de ladite paroi textile interne (12 ; 12' ; 112).
**caractérisé en ce que** ladite couche de feuille externe a des trous micro-perforés (24 ; 124).
dans lequel lesdits trous micro-perforés (24 ; 124) ont un diamètre compris entre environ 50 et 300 µm et ont une masse volumique entre environ 300 et 340 trous par pouce carré (46,5-52,7 trous par cm carré).

2. Manchon de protection (10 ; 110) selon la revendication 1, dans lequel lesdits trous micro-perforés (24 ; 124) ont une masse volumique généralement uniforme sur la totalité substantielle de ladite couche de feuille (14 ; 114).

3. Manchon de protection (10 ; 110) selon la revendication 2, dans lequel lesdits trous micro-perforés (24 ; 124) ont un diamètre compris entre environ 50 et 100 µm.

4. Manchon de protection (10 ; 110) selon la revendication 1 dans lequel lesdits trous micro-perforés (24 ; 124) ont un diamètre compris entre environ 50 et 100 µm.

5. Manchon de protection (110) selon la revendication 1, dans lequel ladite paroi textile intérieure (112) a des bords opposés (26, 28) s'étendant le long d'un axe longitudinal (118) dudit manchon entre des extrémités opposées (120, 122), lesdits bords opposés étant enroulés autour dudit axe longitudinal en relation de chevauchement l'un avec l'autre.

6. Manchon de protection (110) selon la revendication 5, dans lequel ladite paroi textile intérieure (112) est fixée à chaud pour solliciter lesdits bords opposés (26, 28) en relation de chevauchement l'un avec l'autre, ou
dans lequel ladite paroi textile intérieure est formée de filaments de fil entrelacés, ou
dans lequel ladite paroi textile intérieure est formée d'un matériau non tissé, ou
dans lequel lesdits bords opposés se chevauchant forment un joint le long de la longueur de ladite paroi textile interne, et comportant en outre un ruban en feuille (30) lié par-dessus au moins une partie dudit joint, ledit ruban en feuille ayant des trous micro-perforés (124), dans lequel éventuellement ledit ruban en feuille s'étend sur la totalité substantielle dudit joint.

7. Manchon de protection (10) selon la revendication 1, dans lequel ladite paroi textile interne (12 ; 12') est circonférentiellement continue.

8. Manchon de protection (10) selon la revendication 7, dans lequel ladite couche de feuille extérieure (14) a des bords opposés (23, 25) se chevauchant, ou
dans lequel ladite couche de feuille extérieure est enroulée en spirale autour de ladite paroi textile intérieure (12).

9. Procédé de construction d'un manchon tubulaire (10 ; 110) destiné à fournir une protection aux éléments allongés (11) contenus dans le manchon contre la chaleur rayonnante externe, comprenant :
la formation d'une paroi textile intérieure (12 ; 12' ; 112) ayant une surface externe et une surface interne conçue pour délimiter une cavité (16 ; 116) pour la réception des éléments allongés ; et
la liaison d'une couche de feuille externe (14 ; 114) à ladite surface externe de ladite paroi textile interne (12 ; 12' ; 112).
**caractérisé en ce que** ladite couche de feuille externe a des trous micro-perforés (24 ; 124).
et en outre **caractérisé par** la formation desdits trous micro-perforés (24 ; 124) ayant un diamètre compris entre environ 50 et 300 µm ; et par la perforation des trous micro-dimensionnés ayant une masse volumique entre environ 300 et 340 trous par pouce carré (46,5-52,7 trous par cm carré).

10. Procédé selon la revendication 9, comportant en outre la formation desdits trous micro-perforés (24 ; 124) ayant une densité généralement uniforme sur la totalité substantielle de ladite couche de feuille.

11. Procédé selon la revendication 10, comportant en outre la formation desdits trous micro-perforés (24 ; 124) ayant un diamètre compris entre environ 50 et 100 µm.

12. Procédé selon la revendication 9, comportant en outre la formation desdits trous micro-perforés (24 ; 124) ayant un diamètre compris entre environ 50 et 100 µm.

13. Procédé selon la revendication 9, comportant en outre la formation de ladite paroi textile interne (112) ayant des bords opposés (26, 28) s'étendant le long d'un axe longitudinal (118) dudit manchon (110) entre des extrémités opposées (120, 122) et enveloppant lesdits bords opposés autour dudit axe longitudinal en relation de chevauchement l'un avec l'autre.

14. Procédé selon la revendication 13, comportant en outre le réglage thermique de ladite paroi textile intérieure (112) pour solliciter lesdits bords opposés (26, 28) en relation de chevauchement l'un avec l'autre, ou
comportant en outre la formation dudit textile interne avec des filaments de fil entrelacés, ou
comportant en outre la formation de ladite paroi textile intérieure avec un matériau non-tissé, ou
comportant en outre la liaison d'un ruban de feuille (30) ayant des trous micro-perforés (124) sur au moins une partie d'un joint formé entre lesdits bords opposés, dans lequel éventuellement comportant en outre la liaison dudit ruban de feuille par-dessus la totalité substantielle dudit joint.

15. Procédé selon la revendication 9, comportant en outre la formation de ladite paroi textile interne (12 ; 12') étant circonférentiellement continue, dans lequel éventuellement.
comportant en outre la liaison de bords opposés (23, 25) de ladite couche de feuille extérieure (14) en relation avec l'un avec l'autre, ou
comportant en outre l'enroulement en spirale de ladite couche de feuille extérieure autour de ladite paroi textile intérieure.
